# EUROPÄISCHE PATENTSCHRIFT

(11) **EP 1 978 532 B1**
(45) Veröffentlichungstag und Bekanntmachung des Hinweises auf die Patenterteilung: **20.11.2013**
(21) Anmeldenummer: 08004375.5
(22) Anmeldetag: 10.03.2008
(51) Int. Cl.: H01F 7/121, H01F 7/16, F16K 31/06

(54) **Elektromagnetische Stellvorrichtung**
Electromagnetic adjustment device
Dispositif de réglage électromagnétique

(30) Priorität: 04.04.2007 DE 202007005133 U
(43) Veröffentlichungstag der Anmeldung: 08.10.2008
(73) Patentinhaber: ETO MAGNETIC GMBH, 78333 Stockach (DE)
(72) Erfinder: Martin, Andreas, 88605 Meßkirch (DE); Muffler, David, 88605 Meßkirch (DE); Bauerschmidt, Ingo, 201702 Shanghai (CN); Knies, Volker, 78357 Mühlingen-Zoznegg (DE)
(74) Vertreter: Behrmann, Niels

(56) Entgegenhaltungen:
- EP-A- 1 073 070
- DE-A1- 3 014 962
- DE-A1- 4 343 879
- FR-A- 2 544 910
- US-A- 4 054 854

## Beschreibung

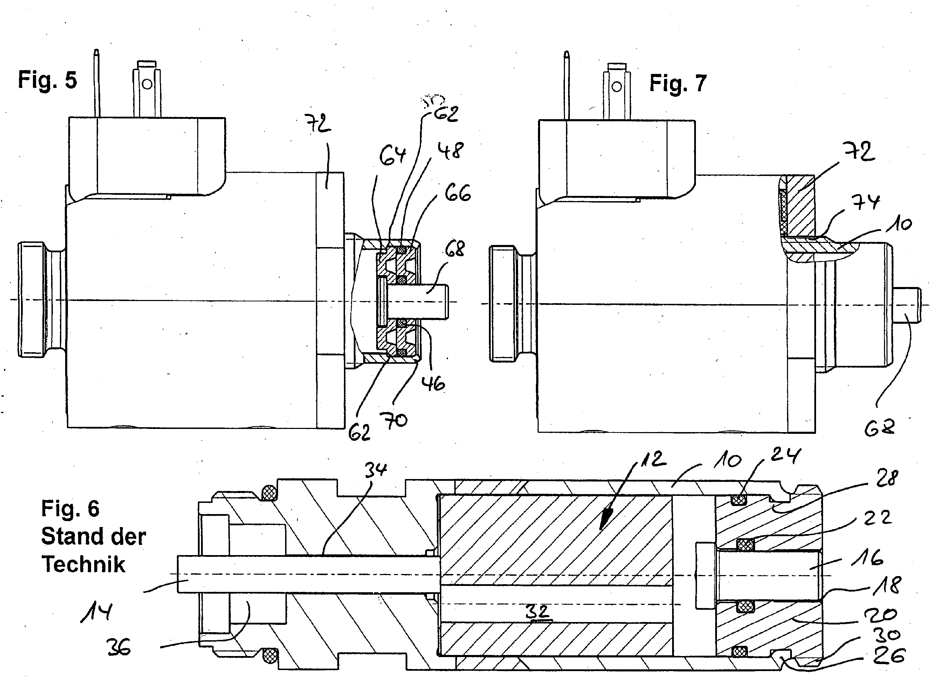

Die vorliegende Erfindung betrifft eine elektromagnetische Stellvorrichtung nach dem Oberbegriff des Hauptanspruchs. Eine derartige Vorrichtung ist aus dem Stand der Technik allgemein bekannt, wobei die Fig. 6 hausinternen Stand der Technik repräsentiert, gleichwohl als gattungsbildend und abgrenzend herangezogen wurde.

Konkret zeigt die Schnittansicht der Fig. 6 eine typischerweise zur Betätigung eines Hydraulik- oder Pneumatikventils als Stellpartner ausgebildete elektromagnetische Stellvorrichtung, welche eine in einem Gehäuse 10 geführte, aus einem Ankerkörper 12 sowie einem daran ansitzenden Ankerstößel 14 gebildete Ankereinheit aufweist. Mit seinem linksseitigen Eingriffsende betätigt der Ankerstößel 14 den Stellpartner.

In nicht gezeigter Weise ist die Anordnung (wie ansonsten bekannt) von einem Spulenträger samt Spulenvorrichtung umschlossen, wobei bei Bestromung der Spulenvorrichtung dann die Ankereinheit 12, 14 (gegen die Kraft einer nicht gezeigten Rückstellfeder, typischerweise auf Seiten des Stellpartners ausgebildet) in die in der Fig. 6 gezeigte linksseitige Position bewegt wird. Bei Entstromung der Spulenvorrichtung bzw. Umpolung des Steuersignals bewegt sich dann die Ankereinheit wiederum zurück in die rechtsseitige (bezogen auf die Fig. 6) Anschlagposition, wobei sie dann an einem Stößelelement 16 (sogenannter Not- bzw. Handstößel zur manuellen Betätigung des Ankers durch z.B. Schieben an einem Angriffsende 18) anliegt. Wie aus der Fig. 6 erkennbar ist, ist der Nothandstößel (typischerweise als Drehteil gefertigt) mittig in einem Anschlagelement 20 (dichtend mittels innerer Ringdichtung 22) gehalten, wobei auch das Anschlagelement 22 (welches wiederum mittels einer äußeren Ringdichtung 24 gegenüber einer hohlzylindrischen Gehäuseinnenwand des Gehäuses 10 abgedichtet ist und mittels einer Ein-Bördelung 26 des Gehäuseendes, welche in eine Ringnut 28 im Element 20 eingreift, unlösbar am Gehäuse befestigt ist) als Drehteil realisiert ist. Zusätzlich weist das Drehteil 20 endseitig ein geeignet aufgebrachtes Außengewinde 30 auf, welches zum Zusammenwirken mit einer (in der Fig. 6 nicht gezeigten) Überwurfmutter vorgesehen ist, mit welcher dann z.B. die gezeigte Anordnung geeignet an einem Einsatzort befestigt bzw. verspannt werden kann.

Die gezeigte Vorrichtung weist zahlreiche Nachteile auf, welche sich vor allem im Hinblick auf günstige großserientechnische Fertigung als ungünstig und verbesserungsbedürftig erweisen: So ist zunächst die Ausgestaltung des Handstößels 16 sowie des hubbegrenzenden Anschlagelements 20 als Drehteile inhärent aufwendig und damit kostenträchtig. Zudem ist auch die gezeigte Anordnung im Hinblick auf einen internen Druck- bzw. Fluidausgleich (vor allem betreffend in der Anordnung fließendes Öl) nachteilig: Wie etwa die in der Schnittansicht der Fig. 6 dargestellte, axial-exzentrisch im Ankerkörper 12 verlaufende Längsbohrung 32 verdeutlicht (welche dann in Strömungsverbindung mit einem dem massiven Ankerstößel 14 umgebenden, i.W. durch Spiel realisierten Kanal 34 steht, welcher sich zum austrittsseitigen Ende 36 öffnet), ist die Fluidführung zum Zweck des Druckausgleichs zwischen rechtsseitigem Endanschlag und dem Ende 36 problematisch und, etwa im Hinblick auf eine präzise Ankerführung, ebenfalls verbesserungsbedürftig.

Eine elektromagnetische Stellvorrichtung nach dem Oberbegriff des Patentanspruchs 1 ist aus der DE 43 43 879 A1 oder aus der US-A-4 054 854 bekannt.

Aufgabe der vorliegenden Erfindung ist es, die gezeigten Schwachstellen zu überwinden, insbesondere die mechanische Realisierung des endseitig im Gehäuse vorgesehenen Anschlagelements, in Verbindung mit der Handstößeleinheit, zu verbessern, und zusätzlich den Fluid-(Öl-) Ausgleich im Gesamtsystem zu optimieren.

Die vorliegende Erfindung wird durch die Vorrichtung nach den Merkmalen des Anspruchs 1 unabhängigen gelöst; vorteilhafte Weiterbildungen der Erfindung sind in den Unteransprüchen beschrieben.

So sorgt zunächst die erfindungsgemäß mittels eines Umform-, Stanz-, Sinter- und/oder Spritzverfahrens hergestellte Lösung für das Anschlagelement dafür, dass dieses vollautomatisiert, mit geringem Aufwand und hoher Präzision hergestellt und montiert werden kann, wobei eine derartige Realisierung (umform- bzw. auch urformtechnisch) beträchtliche Kostenvorteile realisiert. Im Rahmen der Erfindung oder alternativ ist es auch möglich, die gehäuseextern betätigbare Stößeleinheit entsprechend auszugestalten.

Das Anschlagelement ist zweistückig realisiert ist, nämlich mittels eines bevorzugt als Kunststoff- od.dgl. Spritzteil realisierten Anschlagelements und einem damit unmittelbar zusammenwirkenden Scheibenelement, so dass zwischen diesen geeignete Dichtelemente -- entweder unmittelbar ansitzend, z.B. durch Anspritzen od.dgl., oder durch Einsetzen etwa von Ringdichtungen -- gehalten werden können. Eine beispielhafte Alternative ist es, das Anschlagelement als einstückiges Tiefziehteil zu realisieren, welches weiter bevorzugt dann mit geeigneten Nuten, Hinterschneidungen, Absätzen od.dgl. für das Vorsehen von (wiederum einstückig ansitzenden oder separaten) Dichtabschnitten versehen sein kann.

Im Rahmen der Erfindung liegt es zudem, den Stößelabschnitt der aus Ankerkörper und Stößelabschnitt gebildeten Ankereinheit als Hülse od.dgl. Hohlelement zu realisieren, so dass nicht nur -- erfindungsgemäß -- eine günstige Fertigung mittels Tiefziehen od.dgl. möglich ist, sondern auch dieses Element selbst mit dem mittigen Stößelraum als Fluidführungskanal für Fluid-Druckausgleich (z.B. für Öl im gezeigten System) dienen kann, weiterbildungsgemäß zusätzlich in Richtung auf den Ankerkörper einen (Befestigungs-) Flansch bzw. Kragen ausbildet, welcher ökonomisch einfach und eleganterweise als Distanzstück (Distanzabschnitt) zwischen Ankerkörper und betreffende Anschlagposition im Gehäuse dienen kann. Vorteilhaft ermöglicht zudem die Nutzung des hülsenförmigen Stößelabschnitts zum Druckausgleich, dass eine zugehörige, druck-kommunizierende Bohrung im Ankerkörper vorteilhaft mittig bzw. zentrisch geführt werden kann.

Vorteilhaft im Rahmen der Erfindung ist es zudem, das bevorzugt als Tiefziehteil auszubildende Anschlagelement endseitig bezogen auf das Gehäuse so auszugestalten, dass dieses dort mit einem geeigneten Widerlager bzw. einer Hinterschneidung schnappend bzw. rastend zusammenwirken kann, so dass insoweit ein (in der Fertigung aufwendiges) Umbördeln od.dgl. Maßnahme, wie aus dem Stand der Technik bekannt, entfallen kann; alternativ ist es im Rahmen der Erfindung vorgesehen, ein derartiges tiefgezogenes Anschlagelement mit einem Verbindungsabschnitt für unlösbares Verbinden am Gehäuse, z.B. Kleben oder Schweißen, zu versehen.

Im Ergebnis entsteht durch die vorliegende Erfindung in überraschend einfacher und eleganter Weise ein Weg, wie insbesondere unter Fertigungs- und Montagegesichtspunkten vorteilhafte gattungsbildende elektromagnetische Stellvorrichtungen signifikant verbessert werden können.

Weitere Vorteile, Merkmale und Einzelheiten der Erfindung ergeben sich aus der nachfolgenden Beschreibung bevorzugter Ausführungsformen und Beispiele sowie anhand der Zeichnungen; diese zeigen in:
- Fig. 1:: eine Seitenansicht mit teilweisem Schnitt zur Verdeutlichung einer ersten Ausführungsform der vorliegenden Erfindung;
- Fig. 2:: eine stirnseitige Ansicht der Ausführungsform gemäß Fig. 1;
- Fig. 3:: eine teilweise Schnittansicht analog Fig. 1 zur Verdeutlichung einer zweiten Ausführungsform der vorliegenden Erfindung;
- Fig. 4:: eine Stirnansicht der Ausführungsform gemäß Fig. 3;
- Fig. 5:: eine Teil-Schnittansicht einer beispielhaften elektromagnetischen Stellvorrichtung;
- Fig. 6:: eine Schnittansicht zur Verdeutlichung des als gattungsbildend herangezogenen (internen) Standes der Technik;
- Fig. 7:: eine teilweise Schnittansicht gemäß einer weiteren beispielhaften elektromagnetischen Stellvorrichtung;
- Fig. 8:: eine teilweise Schnittansicht einer weiteren beispielhaften elektromagnetischen Stellvorrichtung;
- Fig. 9:: eine teilweise Schnittansicht mit einer weiteren beispielhaften elektromagnetischen Stellvorrichtung;
- Fig. 10:: eine teilweise Schnittansicht mit einer weiteren beispielhaften elektromagnetischen Stellvorrichtung;
- Fig. 11:: eine teilweise Schnittansicht gemäß einer weiteren Ausführungsform der vorliegenden Erfindung, für welche im Zusammenhang mit allen anderen Ausführungsformen, jedoch auch unabhängig Schutz begehrt wird und
- Fig. 12:: eine stirnseitige Ansicht der Ausführungsform gemäß Fig. 11.

Für die Beschreibung der nachfolgenden Ausführungsformen und Beispiele gelten Bezugzeichen sowie Funktionalität der zum gattungsbildenden Stand der Technik beschriebenen Fig. 6 analog, sofern nicht eine abweichende Beschreibung vorgenommen wird.

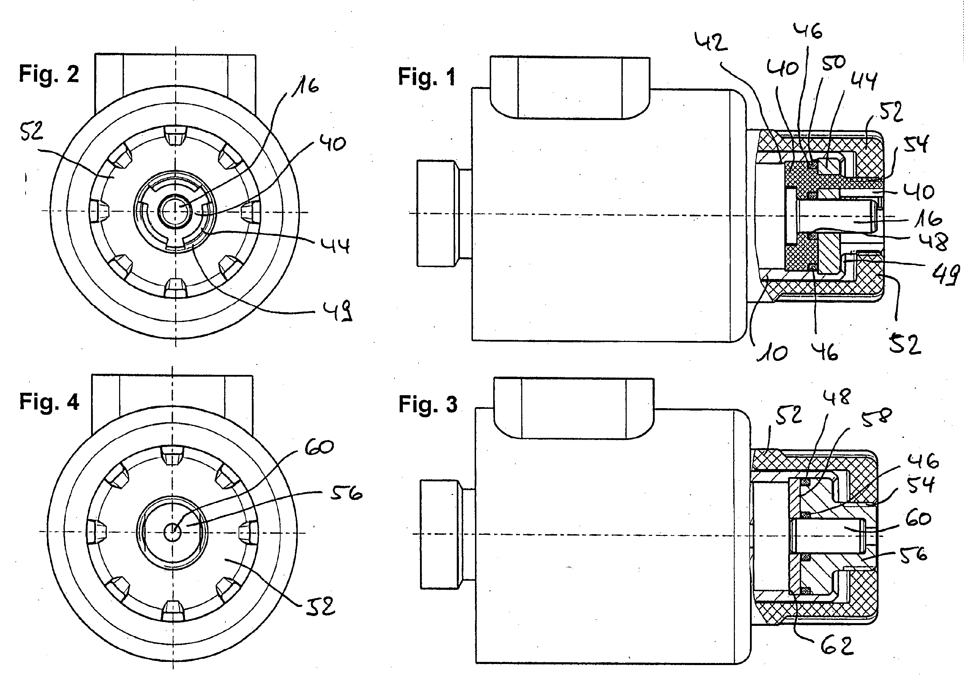

So zeigt die erste Ausführungsforme der Fig. 1, 2 ein Kunststoff-Anschlagelement 40 als Mittel zur Hubbegrenzung, welches als Spritzgießteil realisiert ist und gegen einen ersten Ringabsatz 42 im Inneren des Gehäuses 10 gehalten ist (im Gehäuse 10 ist ansonsten, wie im Zusammenhang mit Fig. 6 erläutert, die Ankereinheit geführt). Das Kunststoff-Anschlagelement 40 wirkt zusammen mit einer (im vorliegenden Beispiel als Sinterelement oder Stanzteil gefertigten) Scheibe 44, wobei zwischen Element 40 und 44 sowohl im Bereich des Außenrandes zur Gehäuseinnenwand, als auch im Bereich des Innenrandes in Richtung auf den Stößel 16 Ringdichtungen 46 (Außendichtung) bzw. 48 (Innendichtung) eingesetzt und verklemmt sind (alternativ sind diese Dichtungen auch durch z.B. auf- bzw. eingespritzte Dichtmaterialien realisierbar).

Die Kombination aus Scheibe 44 und Anschlagelement 40 (wie sich insbesondere aus der Stirnansicht der Fig. 2 ergibt, erstreckt sich ein Abschnitt des Kunststoffelements 40 durch die Scheibe hindurch) liegt an einer Umbördelung 48, welche das Ende des Gehäuses 10 markiert; zusätzlich liegt die Scheibe 44 an einem zweiten inneren Ringabsatz 50 an. Durch die so gezeigte Anordnung ist damit in fertigungstechnisch besonders eleganter und einfacher Weise eine Realisierung des (rechtsseitigen) Ankeranschlags möglich, zusätzlich eine Aufnahme und Führung des Nutstößels 16, wobei die gezeigte Anordnung einfache Fertig- und Montierbarkeit mit bestmöglicher Abdichtung kombiniert.

Die Fig. 3 und 4 zeigen eine zweite Ausführungsform als Variante der in den Fig. 1 und 2 gezeigten ersten Ausführungsform; wie auch dort sitzt eine Überwurfmutter 52 auf einem durch das Gehäuseende hindurch herausragendem äußeren Umfangsende des Elements 40 gebildeten Außengewinde 54.

Im Gegensatz zur Ausführungsform der Fig. 1 sitzt ein Anschlagelement 56 als Kunststoff-Spritzteil im endseitigen Bereich, unmittelbar benachbart einer in Richtung auf der Anker vorgeschalteten (Stanz-) Scheibe 58; wiederum sind innere und äußere Ringdichtungen 46, 48 zur Dichtung gegenüber dem Innengehäuse bzw. einem (hier rein zylinderischen) Stößel 60 vorgesehen. Wiederum im Gegensatz zur Ausführungsform gemäß Fig. 1 ist lediglich ein Ringabsatz 62 im Gehäuseinneren gebildet.

Die Teil-Schnittansicht der Fig. 5 verdeutlicht eine Variante des Anschlagelements; im dort gezeigten Beispiel ist der Anschlag realisiert durch ein Paar von gestanzten oder gesinterten Scheiben 64, 66, welche im gezeigten Beispiel (günstig für Serienfertigung) identisch ausgestaltet sind. Ein im Querschnitt beidseitiger Ringabsatz der Elemente 64 bzw. 66 dient zur Aufnahme innen- bzw. außenseitiger Ringdichtungen 46, 48, bzw. dem Zusammenwirken mit einem endseitigen Absatz eines (hier endseitig herausragenden) Stößels 68. Im Gehäuse endseitig gehalten wird auch diese Anordnung zwischen einem einzelnen Ringabsatz 62 und einer endseitigen Umbördelung 70.

Das Beispiel der Fig. 7 bringt eine Modifikation des Befestigens der in Fig. 1 bzw. in Fig. 3 gezeigten Überwurfmutter 52 (so dass das Beispiel gemäß Fig. 7 prinzipiell mit jeglichen sonstigen Ausführungsformen der vorliegenden Erfindung kombinierbar wäre). Hier übernimmt die Funktion der Überwurfmutter eine mit einem geeigneten Innengewinde versehene Jochscheibe 72, welche auf einem Außengewinde 74 des Gehäuses 10 aufsitzt und Teil des magnetischen Kreises ist.

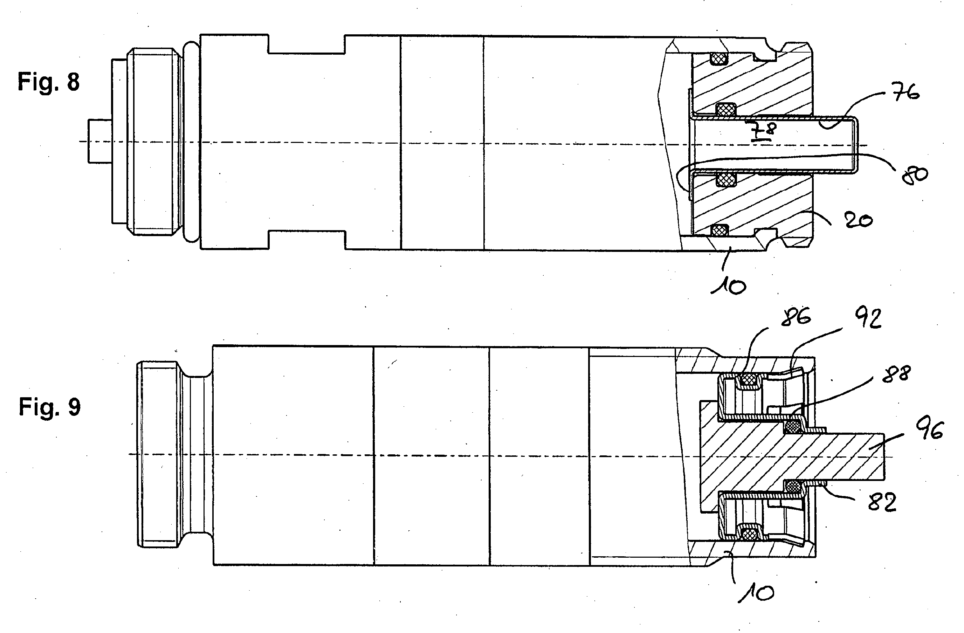

Die Fig. 8 verdeutlicht eine alternative Ausgestaltung des Stößels, wobei hier ein als Tiefziehteil hergestellter Stößel 76 einen hülsenartigen Abschnitt 78 ausbildet, welcher einen umlaufenden, ringförmigen Kragen 80 bildet, wodurch die Stößelanordnung im Innenbereich des Anschlagkörpers 20 gehalten ist (gezeigt ist hier die als Stand der Technik vorausgesetzte Technologie; prinzipiell ist jedoch die Konfiguration des Stößels 76 mit jeder anderen Variante des Anschlagelements gemäß der vorliegenden Anmeldung möglich und denkbar). Nicht nur wird durch diese Vorgehensweise der Stößel einfacher und preisgünstiger herstell- und montierbar, auch erzeugt der Kragen 18 einen Abstand zum Element 20.

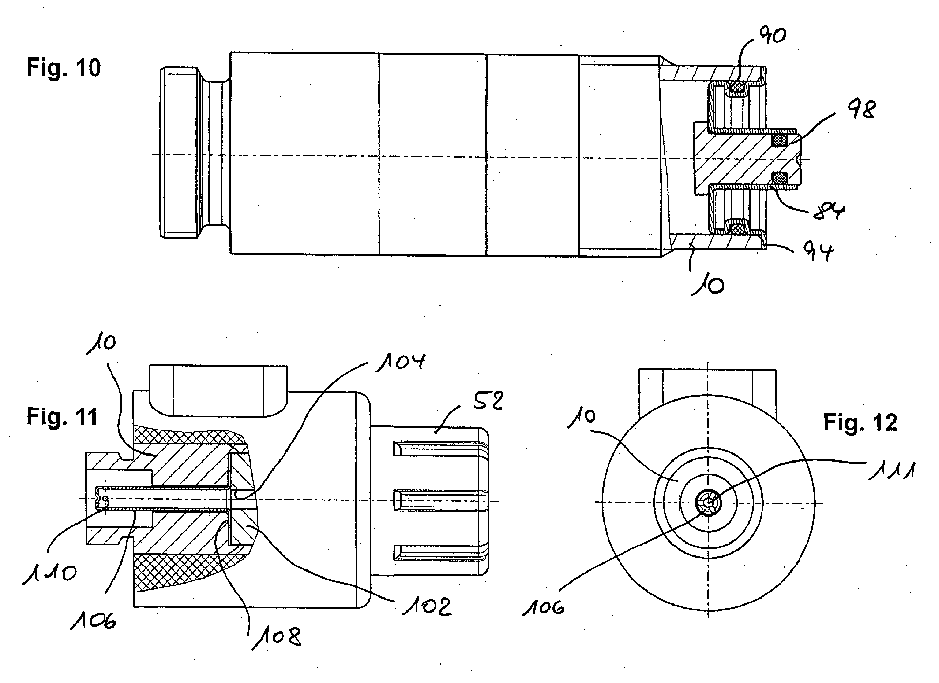

Die Fig. 9 und 10 zeigen gemäß weiterer Beispiele Varianten in der Ausgestaltung des Anschlagelements. Hier ist dieses als einstückiges Tiefziehteil 82 (Fig. 9) bzw. 84 (Fig. 10) realisiert, weist geeignete (z.B. ringnutförmige oder ringabsatzförmige) Einformungen 86, 88 bzw. 90 zum Aufnahmen von Dichtungen gegenüber der Gehäuseinnenfläche bzw. dem Stößel auf und ist am Gehäuse entweder mittels eines federnd aufgebogenen Rastabschnitts 92 (Fig. 9) verbunden, alternativ mittels eines ringförmig abgewinkelten Schweißflansches 94 (Fig. 10). Im ersten Fall würde so eine lös- und schnappbare Vorrichtung entstehen, im zweiten Fall würde durch Kleben oder Verschweißen die Einheit 84 am offenen Gehäuseende unlösbar verbunden werden. In beiden Fällen wird, wie sich aus den Figuren ergibt, eine zuverlässige Führung der jeweiligen Stößel 96 bzw. 98 erreicht.

Die Fig. 11 und 12 verdeutlichen eine weitere Ausführungsform der vorliegenden Erfindung, welche die an einem Ankerblock 102 (entsprechend Element 32 in Fig. 6, jedoch mit zentrischer Mittenbohrung 104) ansitzende Ankerstößeleinheit 106 als Hülse (mittels Tiefziehverfahren hergestellt) ausbildet, dergestalt, dass das offene Hülsenende in Richtung auf den Ankerblock sich ringkragenförmig zu einem Ringflansch 108 erweitert, welcher auf der Innenseite des Gehäuses 10 aufsitzt; mithin bildet dadurch der Flansch einen Distanzabschnitt zum Ankerblock 102 aus, welchermagnetisch wirksam -- eine Festkleben wirksam unterdrücken kann. Gleichzeitig ist auf diese Weise ein Strömungskanal (für Fluid- bzw. Öldruckausgleich im System) zur Mittenbohrung 104 zentral geöffnet, so dass bis hin zum vorderen Eingriffsende des Stößelelements 106 (dort sind geeignete Einformungen bzw. Öffnungen 110 zum Ölauslass gebildet) eine durchgehende Verbindung besteht; im Gegensatz zur Vorgehensweise der Fig. 6 ist dabei nicht mehr erforderlich, dass der Fluidausgleich seitlich des Stößels erfolgt, vielmehr erfolgt er durch dessen Mitte.

## Patentansprüche

1. Elektromagnetische Stellvorrichtung mit einer in einem Gehäuse (10) axial geführten, durch eine Bestromung einer Spulenvorrichtung und insbesondere gegen eine Rückstellkraft einer Rückstellfeder aus einer durch Mittel zur Hubbegrenzung bestimmten ersten Anschlagposition bewegbaren Ankereinheit,
wobei
die Mittel zur Hubbegrenzung ein endseitig im Gehäuse befestigtes, mittels eines Umform-, Stanz-, Sinter- und/oder Spritzverfahrens hergestelltes Anschlagelement (40; 56; 64; 66) aufweisen, welches zum Zusammenwirken mit einer gehäuseextern betätigbaren, zum mechanischen Bewegen der Ankereinheit aus der ersten Anschlagposition eingerichteten Stößeleinheit (16; 60; 68) ausgebildet ist, und wobei
das Anschlagelement aus einem nicht-magnetischen Material hergestellt ist,
**dadurch gekennzeichnet, dass** das Anschlagelement zum Zusammenwirken mit einem Scheibenelement (44; 58) so ausgebildet ist, dass zwischen Anschlagelement und Saheibenelement eine gegen eine Gehäuseinnenwand des Gehäuses und/oder gegen die Stößeleinheit wirkende Dichtung (48; 50) gehalten wird, wobei die Dichtung als separates Element oder angeformt an Anschlagelement und/oder Scheibenelement ausgebildet ist, das Scheibenelement als Stanz-, Spritz- und/oder Sinterteil hergestellt ist und das Anschlagelement endseitig aus dem Gehäuse herausragt und dort einen Gewindeabschnitt (54) ausbildet, welcher zum Zusammenwirken mit einer das Gehäuse an einem Einsatzort sichernden Schraubmutter ausgebildet ist.

2. Vorrichtung nach Anspruch 1, **dadurch gekennzeichnet, dass** das Anschlagelement aus einem Kunststoff-Material hergestellt ist.

3. Vorrichtung nach einem der Ansprüche 1 bis 2, **dadurch gekennzeichnet, dass** die Ankereinheit zum Zusammenwirken mit einem einer Richtung der ersten Anschlagposition entgegengesetzten zweiten Anschlagposition zwischenliegenden Distanzstück (108) ausgebildet ist, wobei das Distanzstück einstückig mit einem eingriffesseitigen Stößelabschnitt (106) der Ankereinheit ausgebildet ist.

4. Vorrichtung nach Anspruch 3, **dadurch gekennzeichnet, dass** der Stößelabschnitt langgestreckt und endseitig zum Zusammenwirken mit einem Ventil ausgebildet ist.

5. Vorrichtung nach Anspruch 3 oder 4, **dadurch gekennzeichnet, dass** der Stößelabschnitt als Tiefziehteil mit einem Hülsenabschnitt und einem planen, stirnseitig an einem Ankerkörper der Ankereinheit anliegenden Kragenabschnitt als Distanzstück ausgebildet ist.

6. Vorrichtung nach einem der Ansprüche 3 bis 5, **gekennzeichnet durch** einen Schmiermittel-Ausgleichskanal, welcher **durch** den Hülsenabschnitt und den zylindrischen Ankerkörper gebildet ist.

7. Vorrichtung nach einem der Ansprüche 1 bis 6, **dadurch gekennzeichnet, dass** die Stößeleinheit und/oder das Anschlagelement als Tiefziehteil ausgebildet ist.

8. Vorrichtung nach Anspruch 7, **dadurch gekennzeichnet, dass** ein auf das Gehäuseende gerichteter Endabschnitt des als Tiefziehteil ausgebildeten Anschlagelements (82) einen gegen ein Widerlager wirkenden Schnappabschnitt (92) aufweist.

9. Vorrichtung nach Anspruch 7, **dadurch gekennzeichnet, dass** das als Tiefziehteil ausgebildete Anschlagelement (84) endseitig einen zum unlösbaren Verbinden mit dem Gehäuseende ausgebildeten Verbindungsabschnitt (94) aufweist.

10. Vorrichtung nach einem der Ansprüche 7 bis 9, **dadurch gekennzeichnet, dass** das als Tiefziehteil ausgebildete
Anschlagelement eine Aufnahmenut (86, 90) für eine gegen eine Gehäuseinnenwand und/oder die Stößeleinheit wirkende Dichtung anbietet.

11. Vorrichtung nach einem der Ansprüche 1 bis 10, **dadurch gekennzeichnet, dass** das Gehäuse ein Außengewinde (74) aufweist, welches zum Zusammenwirken mit einer als Teil des magnetischen Kreises der elektromagnetischen Stellvorrichtung wirkenden Jochscheibe (72) ausgebildet ist, wobei die Jochscheibe zum zusätzlichen Festlegen des Gehäuses (10) an einem Einsatzort eingerichtet ist.

## Claims

1. An electromagnetic adjustment device with an armature unit, axially guided in a housing (10), movable out of a first stop position determined by means for stroke limitation by an energisation of a coil device, and in particular against a restoring force of a restoring spring, wherein
the means for stroke limitation have a stop element (40; 56; 64; 66) secured at the end of the housing, manufactured by means of a forming, stamping, sintering, and/or injection moulding method, which is designed so as to interact with a plunger unit (16; 60; 68), which can be actuated external to the housing, equipped for mechanical movement of the armature unit out of the first stop position, and
wherein
the stop element is manufactured from a non-magnetic material,
**characterised in that**,
the stop element is designed to interact with a disk element (44, 58) such that a seal (48, 50) acting against a housing inner wall of the housing and/or against the plunger unit, is held between stop element and disk element, wherein
the seal is designed as a separate element, or is formed on the stop element and/or disk element, the disk element is manufactured as a stamped, injected moulded, and/or sintered part, and the stop element protrudes from the end of the housing, and there forms a threaded section (54), which is designed to interact with a screw nut securing the housing to a site of deployment.

2. The device in accordance with Claim 1,
**characterised in that**,
the stop element is manufactured from a plastic material.

3. The device in accordance with one of the Claims 1 to 2,
**characterised in that**,
the armature unit is designed to interact with an intermediate distance piece (108) of a second stop position opposed to a direction of the first stop position, wherein
the distance piece is integrally designed with an intervention-side plunger section (106) of the armature unit.

4. The device in accordance with Claim 3,
**characterised in that**,
the plunger section is designed so as to be elongated and so as to interact with a valve at the end.

5. The device in accordance with Claim 3 or 4, **characterised in that**,
the plunger section is designed as a deep-drawn part with a sleeve section and with a plane collar section as a distance piece abutting onto the end face of an armature body of the armature unit.

6. The device in accordance with one of the Claims 3 to 5,
**characterised by**
a lubricant equalisation channel, which is formed by the sleeve section and the cylindrical armature body.

7. The device in accordance with one of the Claims 1 to 6,
**characterised in that**,
the plunger unit and/or the stop element are designed as a deep-drawn part.

8. The device in accordance with Claim 7,
**characterised in that**,
an end section directed towards the end of the housing of the stop element (82) designed as a deep-drawn part has a snap-on section (92) acting against a thrust block.

9. The device in accordance with Claim 7,
**characterised in that**,
the stop element (84) designed as a deep-drawn part has at one end a connecting section (94) designed for permanent connection with the end of the housing.

10. The device in accordance with one of the Claims 7 to 9,
**characterised in that**,
the stop element designed as a deep-drawn part provides an accommodation groove (86, 90) for a seal acting against a housing inner wall and/or the plunger unit.

11. The device in accordance with one of the Claims 1 to 10,
**characterised in that**,
the housing has an external thread (74), which is designed to interact with a yoke plate (72) acting as part of the magnetic circuit of the electromagnetic adjustment device, wherein
the yoke plate is equipped for purposes of additional location of the housing (10) at a site of deployment.

## Revendications

1. Dispositif de réglage électromagnétique comprenant une unité d'induit guidée axialement dans un boîtier (10), pouvant être déplacée par l'alimentation d'un dispositif de bobine et en particulier à l'encontre d'une force de rappel d'un ressort de rappel à partir d'une première position de butée déterminée par des moyens de limitation de course,
les moyens de limitation de course présentant un élément de butée (40 ; 56 ; 64 ; 66) fixé du côté de l'extrémité dans le boîtier, fabriqué par un procédé de façonnage, d'estampage, de frittage et/ou de moulage par injection, lequel élément de butée est réalisé de manière à coopérer avec une unité de tige poussoir (16 ; 60 ; 68) pouvant être actionnée depuis l'extérieur du boîtier, prévue pour déplacer mécaniquement l'unité d'induit depuis la première position de butée, et
l'élément de butée étant fabriqué en un matériau non magnétique,
**caractérisé en ce que** l'élément de butée est réalisé de manière à coopérer avec un élément de rondelle (44 ; 58) de telle sorte qu'entre l'élément de butée et l'élément de rondelle soit retenue une garniture d'étanchéité (48 ; 50) agissant contre une paroi interne du boîtier et/ou contre l'unité de tige poussoir, la garniture d'étanchéité étant réalisée sous forme d'élément séparé ou étant façonnée sur l'élément de butée et/ou sur l'élément de rondelle, l'élément de rondelle étant fabriqué sous forme de pièce estampée, moulée par injection et/ou frittée et l'élément de butée faisant saillie du côté de l'extrémité hors du boîtier et une portion filetée (54) étant réalisée à cet endroit, laquelle est réalisée de manière à coopérer avec un écrou fileté fixant le boîtier sur un lieu d'utilisation.

2. Dispositif selon la revendication 1, **caractérisé en ce que** l'élément de butée est fabriqué en matière plastique.

3. Dispositif selon l'une quelconque des revendications 1 à 2, **caractérisé en ce que** l'unité d'induit est réalisée de manière à coopérer avec un élément d'espacement (108) situé entre la première position de butée et une deuxième position de butée opposée à celle-ci, l'élément d'espacement étant réalisé d'une seule pièce avec une portion de tige poussoir (106) de l'unité d'induit du côté de l'engagement.

4. Dispositif selon la revendication 3, **caractérisé en ce que** la portion de tige poussoir est réalisée sous forme allongée et du côté de l'extrémité de manière à coopérer avec une soupape.

5. Dispositif selon la revendication 3 ou 4, **caractérisé en ce que** la portion de tige poussoir est réalisée sous forme de pièce emboutie avec une portion de douille et une portion de col plane servant d'élément d'espacement, s'appliquant du côté frontal contre un corps d'induit de l'unité d'induit.

6. Dispositif selon l'une quelconque des revendications 3 à 5, **caractérisé par** un canal d'équilibrage de lubrifiant, qui est formé par la portion de douille et le corps d'induit cylindrique.

7. Dispositif selon l'une quelconque des revendications 1 à 6, **caractérisé en ce que** l'unité de tige poussoir et/ou l'élément de butée sont réalisés sous forme de pièce emboutie.

8. Dispositif selon la revendication 7, **caractérisé en ce qu'**une portion d'extrémité de l'élément de butée réalisé sous forme de pièce emboutie (82), orientée vers l'extrémité du boîtier, présente une portion d'encliquetage (92) agissant contre un palier de butée.

9. Dispositif selon la revendication 7, **caractérisé en ce que** l'élément de butée (84) réalisé sous forme de pièce emboutie présente du côté de l'extrémité une portion de liaison (94) prévue pour la connexion imperdable avec l'extrémité du boîtier.

10. Dispositif selon l'une quelconque des revendications 7 à 9, **caractérisé en ce que** l'élément de butée réalisé sous forme de pièce emboutie présente une rainure de réception (86, 90) pour une garniture d'étanchéité agissant contre une paroi interne du boîtier et/ou contre l'unité de tige poussoir.

11. Dispositif selon l'une quelconque des revendications 1 à 10, **caractérisé en ce que** le boîtier présente un filetage extérieur (74), qui est réalisé pour coopérer avec un disque de culasse (72) agissant en tant que partie du circuit magnétique du dispositif de réglage électromagnétique, le disque de culasse étant prévu pour fixer en outre le boîtier (10) sur un lieu d'utilisation.
